# EUROPÄISCHE PATENTSCHRIFT

(11) **EP 0 942 545 B1**
(45) Veröffentlichungstag und Bekanntmachung des Hinweises auf die Patenterteilung: **18.10.2006**
(21) Anmeldenummer: 99200620.5
(22) Anmeldetag: 03.03.1999
(51) Int. Cl.: H04B 10/00

(54) **Spannungsversorgung während des Bereitschaftmodus**
Power supply during stand-by-mode
Alimentation en tension pendant le mode d'attente

(30) Priorität: 07.03.1998 DE 19809905
(43) Veröffentlichungstag der Anmeldung: 15.09.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Bühler, Olaf, c/o Philips Patentverwaltung GmbH, 22335 Hamburg (DE)
(74) Vertreter: Volmer, Georg

(56) Entgegenhaltungen:
- WO-A-90/06633
- DE-A- 3 736 244
- US-A- 4 531 237
- US-A- 4 691 382

## Beschreibung

Die Erfindung bezieht sich auf eine Anordnung nach dem Oberbegriff des Anspruchs 1.

In beispielsweise optischen Bussystemen werden die Busteilnehmer in einen Stand-by-Mode geschaltet, um den Stromverbrauch zu reduzieren. Trotz allem wird auch in diesem Zustand noch ein Strom benötigt, um beispielsweise die Receiver der einzelnen Teilnehmer in Empfangsbereitschaft zu halten. Auch dieser minimierte Stromverbrauch kann für bestimmte Anwendungen zu hoch sein, da die Teilnehmer häufig mit Batterien betrieben werden. Eine Reduzierung des Stromverbrauchs würde somit eine längere Einsatzbereitschaft der batterieversorgten Teilnehmer und auch eine Reduzierung der Batteriegröße und des Gewichts ermöglichen.

In dem Artikel "Call-by-Call Activation Technique for Fiber-Optic Subscriber Transmission Units", in der IEEE Transactions on Communications, Vol. Com-35, No. 12, Dec. 1987, Seiten 1297 bis 1302, wird ein optisches Übertragungssystem beschrieben, bei dem die Komponenten nur während der Datenübertragung mit Spannung versorgt werden. In der Zeit, in der keine Datenübertragung stattfindet, werden nur einige Komponenten, u.a. auch der optische Empfänger, kontinuierlich mit einer Spannung versorgt. Diese Versorgungsspannung wird durch Batterien bereitgestellt. Eine Reduzierung des Stromverbrauchs würde eine Minimierung der Batterien und damit auch eine Minimierung des Gewichts zur Folge haben.

Die US 4,531,237 zeigt eine Energieschutzschaltung mit einem Stand-By-Betriebsmodus. Hierbei erzeugt eine Schaltungsanordnung ein Taktsignal, mit dem eine Schmitt-Trigger-Schaltung angesteuert wird, die wiederum eine Versorgungsspannung für einen Empfänger ausgibt.

Die WO 90/06633 zeigt Funkdatenmodule mit einem Tastverhältnisgenerator, bei dem die periodischen Tastzyklen frei programmierbar sind.

Die US 4,691,382 zeigt eine Schaltungsanordnung zur Energieeinsparung bei Batterien, bei der eine erste und eine zweite Schaltung vorgesehen ist, mit denen die Dauer von Zeitschlitzen eines Batterieeinsparungssystems und das Zeitintervall des Auftretens der Zeitschlitze einstellbar sind.

Die DE 37 36 244 A1 zeigt eine Regelvorrichtung mit fernsteuerbaren Reglern. Es ist eine zentrale Steuerung vorgesehen, die über ein Netzwerk mit lokalen Regelvorrichtungen verbunden sind, wobei zur Verbindung Koppelvorrichtung angeschlossen sind. Die Koppelvorrichtungen sind als optische, akustische oder elektromagnetische Sender und Empfänger ausgestaltet, wobei die Regelvorrichtung batteriegespeist ist.

Aufgabe der Erfindung ist es daher, eine Anordnung anzugeben, die den Stromverbrauch senkt, der für den Empfänger im Stand-by-Mode benötigt wird, ohne daß dessen Funktion beeinträchtigt wird.

Diese Aufgabe wird durch die Merkmale des Patentanspruchs 1 gelöst.

Durch eine Änderung der Frequenz und des Tastverhältnisses kann man die Ansprechzeit des Receivers beeinflussen. Je höher die Frequenz ist, um so kürzer ist die Zeit, die der Receiver benötigt, um eine Wake-up-Prozedur im Busteilnehmer einzuleiten.

Das Tastverhältnis bestimmt, um welchen Faktor der Stromverbrauch im Mittel gesenkt wird. Möchte man beispielsweise den Stromverbrauch auf ein Viertel des ursprünglichen Wertes reduzieren, ist ein Tastverhältnis von 1:3 zu wählen und demnach in der Schaltung einzustellen.

Die Zeit in der der Empfänger im Stand-by-Mode ist, z.B. weil er kein moduliertes Licht empfängt, ist wesentlich größer, als die Zeit in der moduliertes Licht ankommt. Durch dieses Verhältnis wird sehr viel Energie gespart.

Im folgenden wird anhand von Figuren ein Ausführungsbeispiel näher erläutert.
- Fig. 1: zeigt ein Blockschaltbild für die getaktete Spannungsversorgung von Receivern in optischen Bussystemen.
- Fig. 2: zeigt die Schaltungsanordnung zur Takterzeugung.

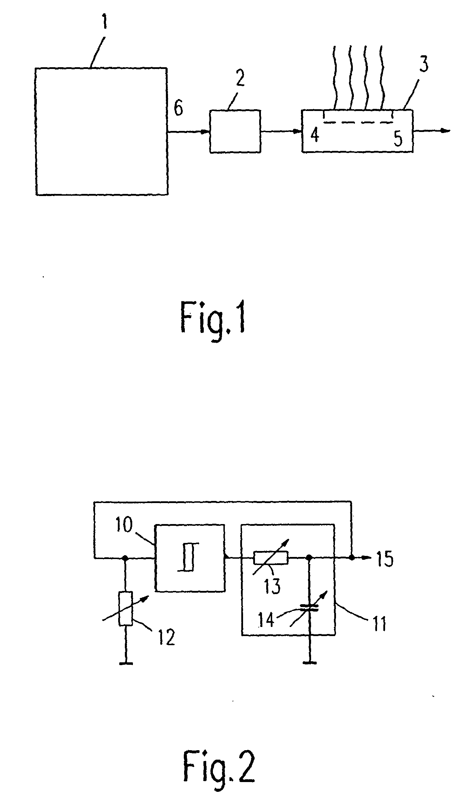

Die Figur 1 zeigt eine Anordnung aus einer Einheit 1, einem Schaltmittel 2 und dem Receiver 3. In der Einheit 1 wird die getaktete Versorgungsspannung erzeugt, und das Ausgangssignal 6 wird an ein Schaltmittel 2 weitergegeben, welches die getaktete Versorgungsspannung an den entsprechenden Eingang 4 des Receivers 3 weitergibt. Der Receiver 3 signalisiert am Status-Pin 5, ob moduliertes Licht ankommt oder nicht. Wenn moduliertes Licht ankommt, wird dies am Status-Pin 5 signalisiert und eine Wake-up-Prozedur im Busteilnehmer eingeleitet. Solange wie der Receiver 3 kein moduliertes Licht empfängt, bleibt der Busteilnehmer im Stand-by-Mode. Erst wenn der optische Busteilnehmer eingeschaltet ist, wird der Receiver 3 nicht mehr wie im Stand-by-Mode mit getakteter Spannung, sondern mit einer kontinuierlichen Spannung versorgt.

Fig. 2 zeigt die Schaltungsanordnung für die Erzeugung einer getakteten Versorgungsspannung, bestehend aus einem Schmitt-Trigger-Inverter 10, einem veränderbaren Widerstand 12 an dem Eingang des Schmitt-Trigger-Inverters 10 und einer RC-Kombination 11, die aus einem veränderbaren Widerstand 13 und einem veränderbaren Kondensator 14 besteht. Das Ausgangssignal 15 stellt das Ausgangssignal 6 der Einheit 1 dar und wird über das Schaltmittel 2 dem Receiver 3 am Spannungseingang 4 (Fig. 1) zugeführt.

Der in der Schaltung gemäß Fig. 2 erzeugte und über das Ausgangssignal 15 ausgegebene Puls läßt sich durch veränderbare Parameter der Komponenten beeinflussen. Mit dem Potentiometer 12 vor dem Eingang des Schmitt-Trigger-Inverters 10 läßt sich das Tastverhältnis der getakteten Versorgungsspannung einstellen. Mit dem Tastverhältnis, welches die Länge der eingeschalteten Phasen zu der Länge der ausgeschalteten Phasen während einer Taktperiode beschreibt, wird der Faktor für die Reduzierung des Stromverbrauchs eingestellt. Je größer das Verhältnis der beiden Phasen zueinander ist, desto mehr Strom wird gespart. Die Frequenz der getakteten Versorgungsspannung ist ein weiterer Parameter und läßt sich durch das Verändern der Zeitkonstante des RC-Gliedes 11 variieren. Die Zeitkonstante ist dabei ein Produkt aus den veränderbaren Werten des Potentiometers 13 und des veränderbaren Kondensators 14. Mit der Frequenz wird die Zeit eingestellt, die der Receiver 3 benötigt, um ankommendes moduliertes Licht am Status-Pin 5 zu signalisieren und eine Wake-up-Prozedur des Busteilnehmers einzuleiten. Je höher die Frequenz ist, um so kürzer ist die Ansprechzeit des Receivers 3 um die Wake-up-Prozedur einzuleiten.

Die Parameter können nur in dem Rahmen verändert werden, der die Funktionsfähigkeit des Gesamtsystems ohne Beeinträchtigung gewährleistet.

## Patentansprüche

1. Anordnung angepasst zur Versorgung eines Empfängers (3) in einem optischen Bussystem mit einer Spannung, umfassend:
eine Schaltungsanordnung (1) zur Erzeugung eines Ausgangssignals (6),
ein Schaltmittel (2) zur Erzeugung einer aus dem Ausgangsignal (6) erzeugten Versorgungsspannung, die zur Zuführung zum Empfänger (3) vorgesehen ist, wobei die dem Empfänger (3) zugeführte Versorgungsspannung während des Stand-by modes getaktet ist,
derart ausgestaltet ist, dass
die Schaltungsanordnung (1) Komponenten aufweist die in ihren Parametern einstellbar sind, wobei die Ansprechzeit des Empfängers (3) über die Frequenz des getakteten Ausgangssignals (6) steuerbar ist und die Frequenz des von der Schaltungsanordnung (1) erzeugten getakteten Ausgangssignals (6) durch Variation einer Zeitkonstante beeinflussbar ist wobei der Empfänger (3) einen Statuspin (5) aufweist, an dem ein Statussignal ausgebbar ist, wenn der Empfänger (3) Licht empfängt, um einen Busteilnehmer im optischen Bussystem in einen aktiven Betriebsmodus zu schalten, wobei der Empfänger (3) nach dem Schalten des Busteilnehmers in den aktiven Betriebsmodus eine kontinuierliche Spannung an seinem Spannungseingang (4) empfängt.

2. Anordnung nach Anspruch 1, **dadurch gekennzeichnet,**
**dass** eine Einsparung des Stromverbrauchs in einem Verhältnis zum Tastverhältnis steht, welches durch einen veränderbaren Parameter bestimmbar ist.

## Claims

1. A device adapted for the power supply of a receiver (3) in an optical bus system, the device comprising: a circuit arrangement (1) for generating an output signal (6), a switching means (2) for generating a supply voltage produced from the output signal (6), which supply voltage is provided for being applied to the receiver (3), the supply voltage applied to the receiver (3) being clocked during the stand-by mode, the arrangement being designed such that the circuit arrangement (1) includes components whose parameters can be adjusted, while the response time of the receiver (3) can be controlled via the frequency of the clocked output signal (6) and the frequency of the clocked output signal (6) generated by the circuit arrangement (1) can be influenced by varying a time constant, the receiver (3) has a state pin (5) from which a state signal can be issued when the receiver (3) receives light so as to switch a bus user of the optical bus system into an active operating mode and the receiver (3) receives a continuous voltage on its voltage input (4) after the bus user has been switched into the active operating mode.

2. A device as claimed in claim 1, **characterized in that** a saving on the power consumption is related to the pulse duty factor by a ratio which can be determined by a variable parameter.

## Revendications

1. Dispositif destiné à l'alimentation d'un récepteur (3) dans un système de bus optique avec une tension, comprenant
un circuit (1) pour la production d'un signal de sortie (6),
un commutateur (2) pour la production d'une tension d'alimentation produite à partir du signal de sortie (6) qui est prévue pour l'alimentation vers le récepteur (3), la tension d'alimentation amenée au récepteur (3) étant cadencée pendant le mode de stand-by,
conçu de telle sorte que
le circuit (1) présente des composants dont les paramètres sont réglables, le temps de réponse du récepteur (3) peut être commandé par l'intermédiaire de la fréquence du signal de sortie cadencé (6) et la fréquence du signal de sortie (6) cadencé produit par le circuit (1) peut être influencée par variation d'une constante temporelle, le récepteur (3) présentant un pin d'état (5) sur lequel un signal d'état peut être délivré lorsque le récepteur (3) reçoit de la lumière pour commuter un participant de bus dans le système optique de bus dans un mode de fonctionnement actif, le récepteur (3) recevant une tension continue à son entrée de tension (4) après la commutation du participant du bus dans le mode de fonctionnement actif.

2. Dispositif selon la revendication 1, **caractérisé en ce qu'**une économie d'électricité est proportionnelle à la durée de cycle qui peut être déterminée par un paramètre variable.
